# EUROPEAN PATENT SPECIFICATION

(11) **EP 3 357 688 B1**
(45) Date of publication and mention of the grant of the patent: **08.06.2022**
(21) Application number: 16850832.3
(22) Date of filing: 22.07.2016
(51) Int. Cl.: B29C 51/08, B29C 51/10, B32B 27/12, B29C 65/40, B32B 5/02, C08J 5/04, B32B 7/12, B32B 27/30, B32B 27/32, B32B 27/36, B32B 27/40, B29C 63/02, B29L 31/52, B29K 105/06, B29C 51/12, B29C 51/16, B29C 51/26, B29L 31/30, B32B 3/30, B32B 27/16, B29C 51/04, B29C 51/14, B29C 51/46, B29K 105/00

(54) **RESIN MOLDED ARTICLE, METHOD FOR MANUFACTURING RESIN MOLDED ARTICLE**
HARZFORMARTIKEL, VERFAHREN ZUR HERSTELLUNG EINES HARZFORMARTIKELS
ARTICLE MOULÉ EN RÉSINE, PROCÉDÉ POUR FABRIQUER UN ARTICLE MOULÉ EN RÉSINE

(30) Priority: 02.10.2015 JP 2015197001
(43) Date of publication of application: 08.08.2018
(73) Proprietor: Tensho Electric Industries Co., Ltd., Machida-shi, Tokyo 194-0005 (JP)
(72) Inventor: SUZUKI Masato, Hiki-gun Saitama 350-0142 (JP)
(74) Representative: Andrejewski - Honke Patent- und Rechtsanwälte Partnerschaft mbB
(86) International application number: PCT/JP2016/071499
(87) International publication number: WO 2017/056655

(56) References cited:
- JP-A- H05 116 211
- JP-A- 2006 007 422
- JP-A- 2006 007 422
- JP-A- 2015 044 326
- US-A- 5 908 524
- US-A1- 2004 253 428
- US-A1- 2007 231 576
- US-A1- 2011 274 894
- US-A1- 2012 263 947
- US-A1- 2013 008 591

## Description

### Technical Field

The present invention relates to resin-molded articles and a process for manufacturing said articles.

### Background of the Art

Molded articles, those which are manufactured with a material prepared by kneading a fibrous base material and a resin material and then molding the mixture into a desired shape, have been known in the past. As an example thereof, fiber-reinforced plastic using carbon fibers as the fibrous base material has been prepared. This fiber-reinforced plastic has superior strength and rigidness than those made of metals and advantage in the lightness and less corrosiveness. In this concern, it has been used in various fields as structural parts capable of being mass-produced. In addition, because of its excellent suitability to mass-production, it has also been used for various purposes including both interior and exterior automotive parts, electric appliances, sporting goods and so on.

On the other hand, a method for forming a coating film and coated articles produced thereby are disclosed in the Patent Reference 1 as technology for coating parts made of such a fiber-reinforced plastic to commercialize them. This article is structured by defining the film thickness and parallel light transmissivity such that it takes on metallic glaze in the specular direction and delustering material feeling of the fiber-reinforced plastic in the other direction.

The automotive exterior trim parts defined in the appended Patent Reference 2 are prepared by adding and kneading acrylonitrile-styrene resin with PC and PBT at the adding rate of several to several tens percent by weight relative to the whole weight and adding carbon black and plastic dye as the coloring agent so that deep impressive color and surface hardness can be provided to the prepared polymer-alloyed resin without paint application. In addition thereto, such a functional part for an automotive use that can simply provide automotive interior trim part with light-emitting function (Patent Reference 3) and such an automotive body and parts those which are applied with a lowbrightness paint provided with beautiful appearance and chemical resistance equivalent to the conventional level without using black dye (Patent Reference 4) are also disclosed. Furthermore, as shown in the appended Patent References 5 through 7, a vacuum molding method and a vacuum molding apparatus adopted to adhere a decorative film or a sheet-shaped material onto an adherend have been already disclosed. Patent Reference 8 discloses a multilayer film having a substrate, a surface layer containing a polycarbonate and a tie layer comprising a polycarbonate and a poly(alkylene ester) composition. The process used to laminate the multi-layer is chosen between compression molding, thermoforming, hydroforming or vacuum forming. The thickness of the skin material ranges from about 25 to about 1,270 µm, i.e. 0.25 mm - 1.27 mm.

### Prior Art Documents

### References of the Prior Art

Patent Reference 1: Japanese Patent Publication Gazette No. 2012-200681
Patent Reference 2: Japanese Patent Publication Gazette No. Hei-11-106518
Patent Reference 3: International Patent Publication No. WO2013/022027 Patent
Reference 4: Japanese Patent Publication Gazette No. Hei-5-293434 Patent
Reference 5: Japanese Patent Publication Gazette No. 2015-44285 Patent
Reference 6: Japanese Patent Publication Gazette No. 2012-116094 Patent
Reference 7: Japanese Patent Publication Gazette No. 2012-96416
Patent Reference 8: US Patent Application US 2007/231576 A1

### Outline of the Invention

### Problem to be solved by the Invention

Although the plastic moldings kneaded with fibers have such advantages as it excels in the strength and the rigidness as described above and is lightweight, fibrous parts are exposed on the surface, whereby causing the surface of a molding to be rough and convexo-concave. Because of that, though it depends on the use, it is required either to apply paint in the post-process or to ask an experienced operator to smooth the surface by means of repeated painting and surface polishing. Thus, it is problematic not only that the conventional fiber-reinforced moldings requires great care for the surface processing in the post-process and is costly, but also that the smoothing of the surface is made unevenly due to the difference in the workmanships of the painting and polishing operators. In particular, resistance against both weather and ultraviolet rays is strictly demanded in case that the moldings using carbon fibers are used outdoors.

It is an object of the present invention to provide resin-molded articles, to which such advantages as strength, rigidness and light weight are secured thanks to kneading with fibers, and which has excellent surface characteristics such as smoothness of the surface and beauty in the appearance, and resistance against weather, ultraviolet rays and light.

Further, it is another object of the present invention to provide a process for manufacturing the resin-molded articles, which is capable of facilitating the surface processing of the molded article using a fibrous base material as the supporting base, reducing the number of the steps, and achieving homogeneity of the surface property like smoothing of the surface.

### Means for solving the Problem

For solving the problem, the invention teaches a resin-molded article according to claim 1.

According to the present invention, the molded base is characterized in that it is molded with the fibrous base material to which at least one of ABS, polycarbonate, acryl and nylon is added as a binding agent.

According to the other embodiment of the present invention, the surface skin member is characterized in that an adhering layer is attached to the underside of a resin film and a decorative layer is formed on the surface of the molded base.

According to still the other embodiment of the present invention, the surface skin member is characterized that the adhering layer is attached to the underside of the resin film and a decorative layer is intervened between the resin film and the adhering layer.

According to still the other embodiment of the present invention, the resin surface skin member is characterized in that it is prepared by etching the underside of the resin film and an adhering layer is attached to said underside.

According to the present invention, the resin surface skin member is characterized in that it comprises at least one material selected from a group consisting of acryl, polycarbonate, ABS, PET, vinyl chloride, polyurethane and polypropylene.

According to the present invention, the resin surface skin member is characterized in that the thickness thereof is in a range of from 0.1 mm to 5 mm.

For solving the problem, the invention furthermore teaches a process for manufacturing resin-molded articles according to claim 5.

In one embodiment of the manufacturing process for the resin-molded articles according to the present invention, the resin surface skin member is characterized in that an adhering layer is attached to the underside of the resin film and a decorative layer is formed on the surface of the molded base.

In the other embodiment of the manufacturing process for the resin-molded articles according to the present invention, the resin surface skin member is characterized in that an adhering layer is attached to the underside of the resin film and a decorative layer is intervened between the resin film and the adhering layer.

In still the other embodiment of the manufacturing process for the resin-molded articles according to the present invention, the resin surface skin member is characterized in that the underside thereof is etched and an adhering layer is then attached to said underside.

In the manufacturing process for the molded articles according to the present invention, the resin surface skin member is characterized in that it is made of at least one material selected from a group consisting of acryl, polycarbonate, ABS, PET, vinyl chloride, polyurethane and polypropylene.

In the manufacturing process for the resin-molded articles according to the present invention, the resin surface skin member is characterized in that the thickness thereof is in a range from 0.1 mm to 0.5 mm.

In the manufacturing process for the resin-molded articles according to the present invention, the resin surface skin member is characterized in that it is molded with the fibrous base material added with ABS, polycarbonate, acryl and nylon as a binding agent.

An apparatus for manufacturing resin molded articles according to the present invention comprises:
a lower chamber box movably holding a tray used for the molded fibrous base in the vertical direction,
an upper chamber box having a heater built-in and movable in the vertical direction relative to the lower chamber box,
a resin surface skin member extended over the area locating between the upper and lower chamber boxes,
a negative pressure biasing means arranged in both of the upper and lower chamber boxes and communicating them,
a pneumatic biasing means arranged in both of the upper and lower chamber boxes and communicating them,
a driving unit for moving the tray in the vertical direction, and
a driving unit for moving the tray in the vertical direction and a driving unit for moving the upper chamber box in the vertical direction,
characterized in that the apparatus is configured such that the resin surface skin member is attached to the molded base by virtue of press given by the molded base on the tray against the resin surface skin member owing to the elevation of the lower chamber box, or application and release of bias generated by the negative pressure biasing means and the pneumatic biasing means, or heating by the heater.

### Advantageous Effect of the Invention

According to the present invention, resin-molded article which has excellent surface property such as smoothness and beautiful appearance while keeping its advantages in strength, rigidness and lightweight resulting from kneading with fibrous material and is simultaneously resistant to weather, ultraviolet rays and light, can be attained. Yet, with the present invention, a process for manufacturing the resin-molded articles which enables facilitation of surface processing of the molded fibrous base, reduction of the manufacturing steps and homogenization of the surface property such as surface smoothing can be attained as well.

### Brief Explanation for the Drawings

[Fig. 1] An enlarged cross section of the resin-molded article according to an embodiment of the present invention.
[Fig. 2] An enlarged cross section of the resin-molded article according to the other embodiment of the present invention.
[Fig. 3] An enlarged cross section of the resin-molded article according to still the other embodiment of the present invention.
[Fig. 4] An enlarged cross section of the resin-molded article according to still the other embodiment of the present invention.
[Fig. 5] A vertical cross section of an apparatus for manufacturing the resin-molded article according to an embodiment of the present invention.
[Fig. 6] A schematic view showing the former steps of the manufacturing process for the resin-molded article according to an embodiment of the present invention.
[Fig. 7] A schematic view showing the latter steps of the manufacturing process for the resin-molded article according to an embodiment of the present invention.
[Fig. 8] A perspective view showing an example of using the resin-molded article according to the present invention.
[Fig. 9] A perspective view showing the other example of using the resin-molded article according to the present invention.

### Description of Reference Numerals

1: Molded base
2: Adhering layer
3, 29: Resin surface skin member (Transparent resin film)
4: Decorative layer
5: Etching
10: Resin-molded article
20: Manufacturing apparatus for resin-molded articles
21: Lower chamber box
22: Upper chamber box
23: Tray
24, 31: Driving unit for vertical moving
26: Vacuum tank
27: Switching valve
28: Holding frame
30: Heater
32: Pneumatic tank
33: Cutter
41: Automotive bumper
42: Sideview mirror
50: Golf shaft

### Embodiment for carrying out the Invention

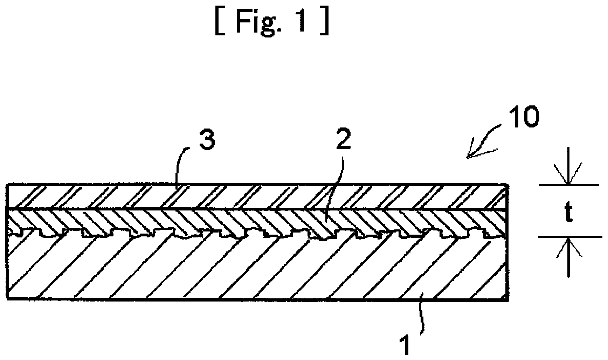

Now, the present invention is explained by means of the examples given below with referring to the appended drawings. Figs. 1 to 4 show the resin-molded article 10 prepared according to various examples of the present invention. Fig. 1 shows an example of the resin-molded article 10 which is prepared by sticking a resin surface skin film, for example a transparent resin film 3 via the adhering layer 2 to the upper surface of the molded article 1, which is prepared by mixing a fibrous base material comprising carbon fibers, glass fibers or the complex thereof to a binding agent, followed by molding the mixture. Although the surface of the molded article 1 mixed with the fibrous base material becomes irregular due to the fibrous base material, smooth surface can be attained by sticking the resin film 3 to the irregular surface. Therefore, the molded article 1 can be used for automotive interior and exterior trim parts such as a bumper without applying painting and surface polishing. Note that the molded article prepared by mixing and subsequently molding the fibrous base material and a resin is lightweight and excellent in strength, rigidness and mass-productivity.

As the manner for molding the fibrous base material, though various manners as exemplified below can be employed, it should not be limited to those manners given below. The molding manner includes molding the fibrous base material following to mixing a binding agent as a binder to the fibrous base material, molding after weaving or twisting the fibrous base material, molding by covering the fibrous base member formed by weaving the fibrous material with a binding agent, molding by covering the fibrous base member formed by twisting the fibrous material with a binding agent, molding by forming the fibrous material by employing the above-described manner and apply foundation painting to the surface, and molding by forming the fibrous material by employing the above-described manner and apply foundation painting to the surface and followed by sanding thereof. While, as the resin surface skin film, various types of synthetic resin sheets being capable of sticking to the fibrous base member may be employed. As an example, if acryl material is used for the transparent resin film 3, the resulted film may be resistant to weather and ultraviolet rays, and the film made of either PC or ABS material may acquire better moldability and productivity. Therefore, the material to be used can be appropriately selected depending on the application. For the adhering layer, an acrylic adhesive is used according to the invention. The thickness t of the resin surface skin film (transparent resin film 3) containing an adhering layer is preferably in a range of from 0.1 mm to 0.5 mm, however, it is arbitrary determined depending on the application such as place to be used of the molded article. The structures of the molded article 1, the adhering layer 2 and the resin surface skin film 3 as explained in the following are same as those described above, respectively. Note that the employable material examples to be used for the resin surface skin film 3, all materials respectively made of acryl, PC, ABS, PET, vinyl chloride, polyurethane and polypropylene may be given. While, for the binding agent, materials respectively made of ABS, polycarbonate, acryl and nylon are employable. However, the materials being employable for the resin surface skin member is not limited to those described above, any resin sheet that can stick to the molded article in the steps described latter and any material that can be molded with the fibrous material may be employed for the resin surface skin member and the binding agent, respectively.

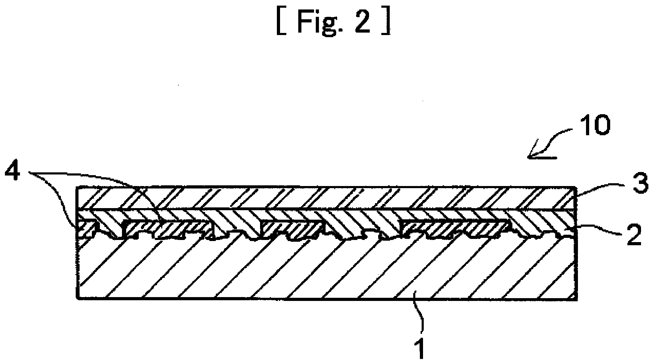

With regard to the resin-molded article 10 according to the example shown in Fig. 2, a decorative layer 4 with letters, figures, etc. is formed by means of a printing means to the surface of the molded article 1 from the mixture of a fibrous base material and a resin material, an adhering layer 2 is attached to the surface of the molded article 1 including the decorative layer 4, and further a transparent film 3 is stuck to the upper side of the adhering layer 2. By structuring the adhering layer 2 with an acryl adhesive, the decorative layer 4 of the molded article will be visible from the outer side of the transparent film 3.

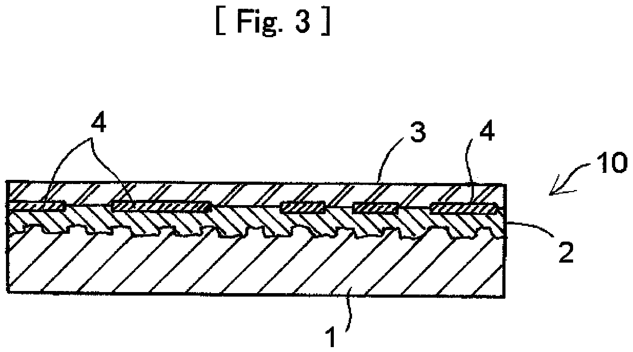

With regard to the resin-molded article 10 according to the example shown in Fig. 3, the transparent film 3 is stuck to the lower adhering layer 2 in such a state that the adhering layer 2 is attached to the upper side of the molded article 1 and the decorative layer 4 is intervened between the adhesive layer 2 and the transparent film 3. Similarly to the example shown in Fig. 2, the irregular surface of the molded article 1 is smoothed with the transparent film 3 and the decorative layer 4 will be visible from the outer side of the transparent film 3.

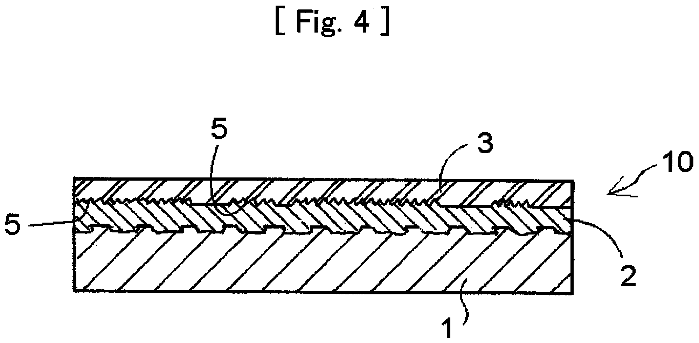

In respect of the resin-molded article 10 shown in Fig. 4, etching 5 is applied to the underside of the resin film and the etched underside is stuck to the upper side of the molded article 1 via the adhering layer 2. By using a transparent film for the resin film and forming the etching in a desired pattern, the etching will be visible as a decorated plane from the outer side of the transparent film 3. Furthermore, binding with the adhering layer 2 is further secured by virtue of the etching and the resin-molded article 10 with rigid surface property can be attained.

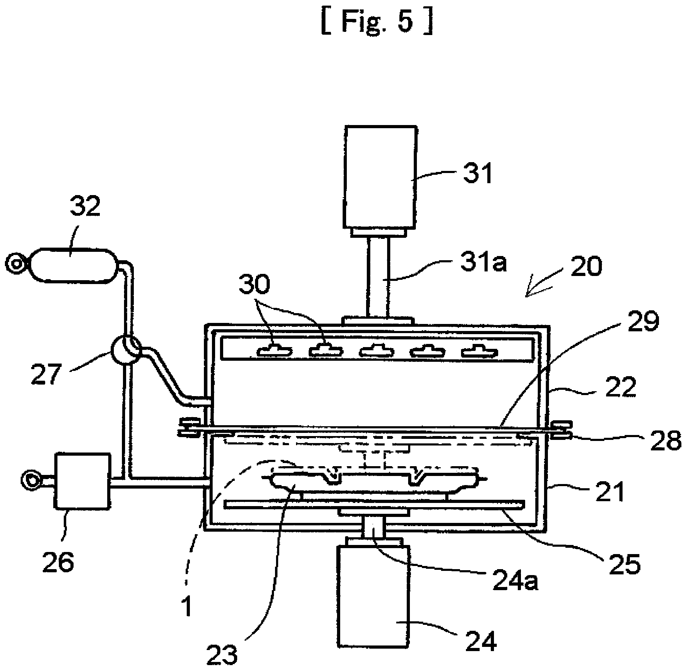

With referring to Figs. 5 to 7, the process and apparatus for manufacturing resin-molded articles according to the present invention will now be explained. Referring to Fig. 5, the apparatus for manufacturing resin-molded articles 20 according to an example of the present invention is provided with a lower chamber box 21 and an upper chamber box 22 both of those which can be separated relative to the other in the vertical direction. Inside the lower chamber box 21, a tray 23 on which the molded base 1 (shown with a virtual line) made of a fibrous material comprising carbon fibers, glass fibers or the complex thereof is placed is arranged in a vertically-movable fashion. Specifically, a vertically-movable driving unit 24 is provided to the underside of the lower chamber box 21, an actuating rod 24a of the driving unit 24 is inserted into the lower chamber box 21 and a supporting table 25 of the tray 23 is connected to the actuating rod 24a. To the lower chamber box 21, a vacuum suction unit, for example a vacuum tank 26 is connected. The vacuum tank 26 is structured such that it communicates with the upper chamber box 22 via the switching valve 27. Yet, a film holding frame 28 is provided to the upper end of the lower chamber box 21, a resin surface skin film 29 comprising a resin film (a transparent film) as described in Figs. 1 to 4, an adhering layer, a decorative layer, etc. is exchangeably attached to the holding frame 28, and the inside of the boxes are kept in sealed condition in such a state that the resin surface skin film 29 is attached to the opening located at the upper end of the lower chamber box 21.

Inside the upper chamber box 22 that ascends and descends relative to the lower chamber box 21, a heater 30 is arranged at the upper position. A verticallymoving driving unit 31 is provided to the upper position of the upper chamber box 22, and the actuating rod 31a thereof is connected to the upper side of the upper chamber box22. Besides, a pressuring apparatus, e.g. a pneumatic tank 32, for rendering the inside of the upper chamber box 22 to be in a pressurized state is connected to said upper chamber box 22 via the switching valve 27. In such a state that the upper chamber box 22 is lowered and closely contacted to the lower chamber box 21 being attached with the resin surface skin film 29, both insides of the upper and lower chamber boxes 22, 21 are kept in a sealed condition.

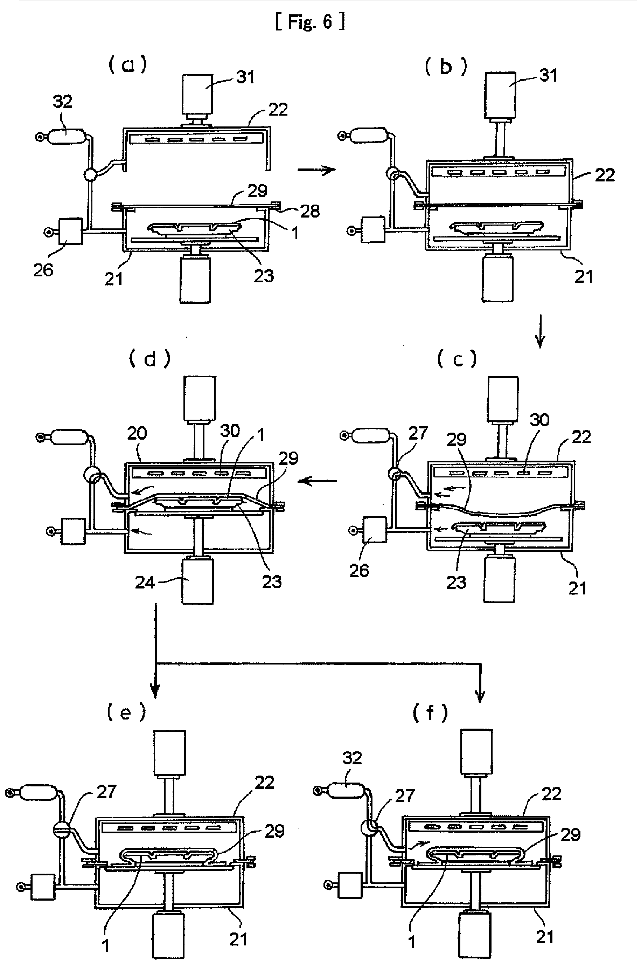

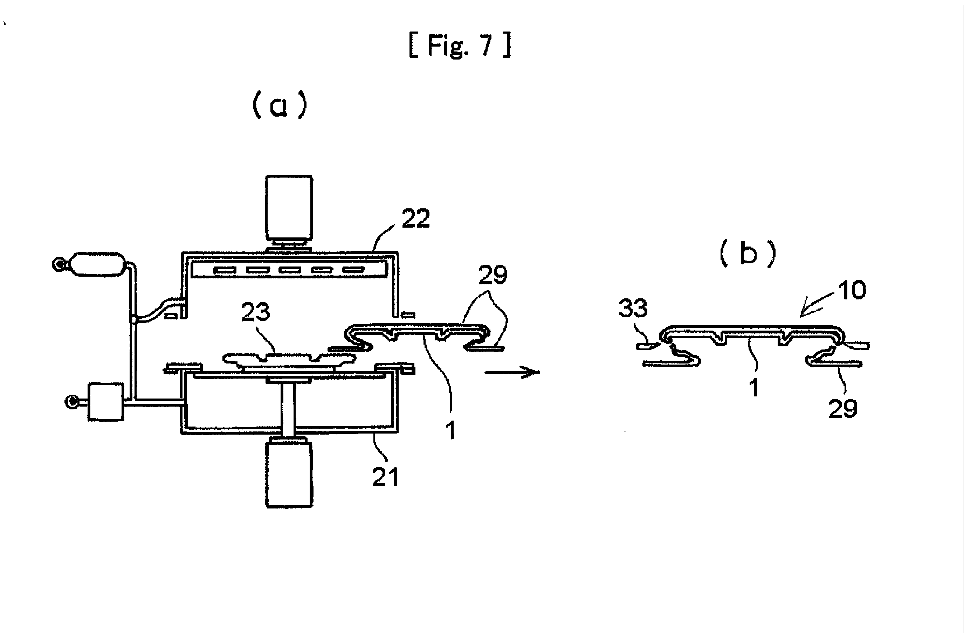

Taking the manufacturing apparatus for the resin-molded articles configured as described above as an example, the process for manufacturing the resin-molded articles according to the present invention will now be explained with referring to Fig. 6 and Fig. 7. At first, as shown in Fig. 6(a), the upper chamber box 22 is ascended by the driving unit 31 to thereby place a target molded article 1, that has been prepared by mixing and subsequent molding of the fibrous base material, on a tray 23 provided inside the lower chamber box 21, and at the same time, a desired resin surface skin film 29 is set to the holding frame 28 of the resin surface skin film at the upper end of the lower chamber box. At this moment, the inside of the lower chamber box 21 is in a sealed condition. For the resin surface skin film 29, any one of the surface skin films, the one consisted of a transparent film and an adhering layer, the one consisted of a transparent film, a decorative layer and an adhering layer, and the one consisted of a transparent film, the underside of which being etched, and an adhering layer is selected corresponding to the type and application of the article. Note that the adhering layer of the resin surface skin film 29 is set downward, namely to the holding frame 28 so as to face off against the molded article 1 placed on the tray 23.

Then, as shown in Fig. 6(b), the upper chamber box 22 is descended by the driving unit 31 so as to closely contact to the lower chamber box 21, and as shown in Fig. 6(c), by manipulating the switching valve 27, the insides of both upper and lower chamber boxes 22, 21 is vacuum sucked by the vacuum suction unit (vacuum tank 26) so as to be in a negatively-pressurized condition. At the same time, a heater 30 is biased to heat the resin surface skin film 29 in the box to soften the surface skin film. Hanging down of the resin surface skin film 29 somewhat toward the tray 23 side in Fig. 6(c) indicates that the surface skin film has been softened due to heating with the heater 30.

Then, as shown in Fig. 6(d), the molded article 1 on the tray 23 is ascended by the driving unit 24 and is pressed against the softened resin surface skin film 29 so that the resin surface skin film 29 is stuck to the molded article 1.

Subsequently, the inside of the upper chamber box 22 is shifted from the negative pressurized state to either opened-to-air state or pneumatic state while actuating the heater 30 inside the upper chamber box 22 to thereby accelerate the adhesion of the resin surface skin film 29 to the surface of the molded article. Fig. 6(e) shows the state that the inside of the upper chamber box 22 is opened to air, and Fig. 6(f) shows the state that the inside of the upper chamber box 22 has been in a pneumatic condition by means of a pneumatic apparatus and the pneumatic tank 32. Although either state may be employed to the manufacturing process, the pneumatic addition configuration as shown in Fig. 6(f) must be employed when the objective article requires more strong sticking property. Following thereto, the pneumatic state and the vacuum suction are released as shown in Fig. 7(a) and the upper chamber box 22 is ascended to remove the resin-molded article being stuck with the surface skin film 29 from the tray 23. Since the peripheral portion of the resin surface skin film 29 protrude slightly from the molded article 1 in this state, the portion of the resin surface skin film 29 that protrudes from the molded article 1 is cut by trimming with a cutter 33 as shown in Fig. 7(b) so that the resin-molded article 10 can be finished. Note that no protrusion of the resin surface skin film from the molded article has been found, trimming work as shown in Fig. 7(b) may be omitted.

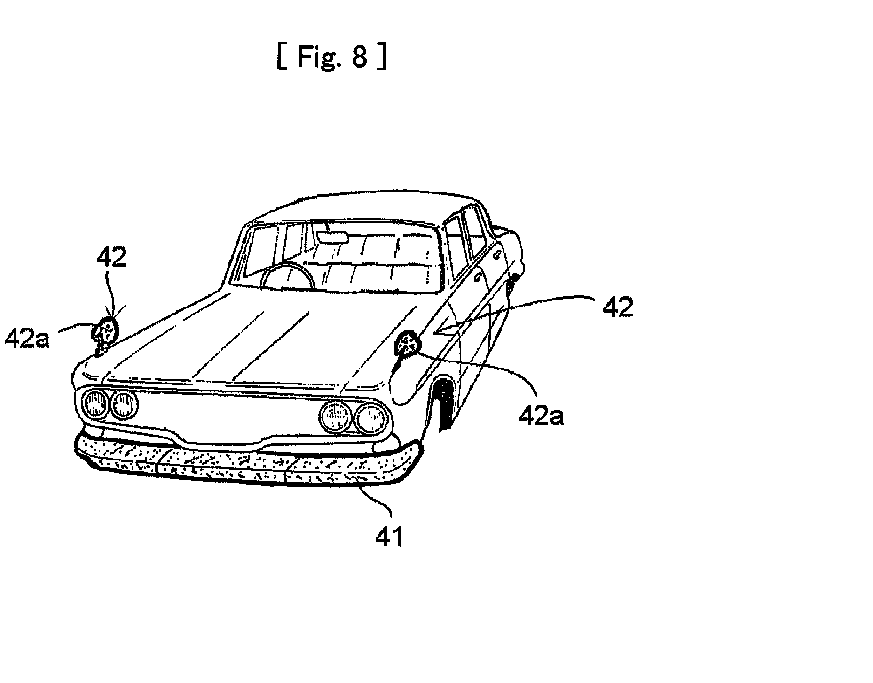

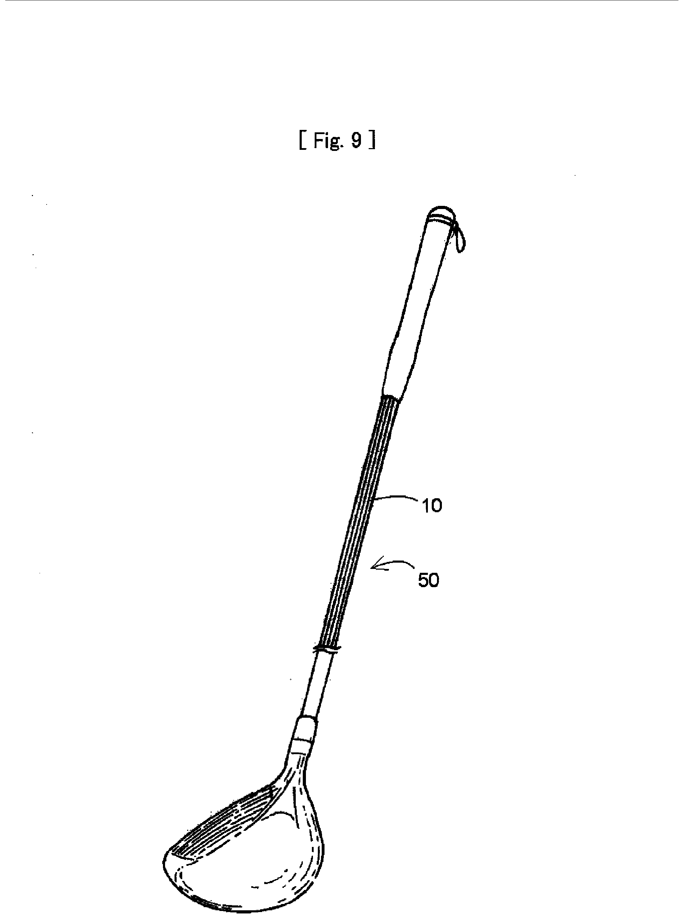

The resin-molded article to which surface processing having been applied according to the present invention may be used for various applications because it has advantages of high strength and rigidness, light weight, highly resistant to weather and ultraviolet rays, smoothed surface irregularity and beautiful appearance. Fig. 8 shows an example of applying the resin-molded article to an automotive bumper 41 and a rear holding member 42a to be used for a sideview mirror 42. The resin-molded article according to the present invention can be simply replaced with existing automotive parts and exert performance in the strength, etc., and it can be accepted further for automotive parts as a material capable of exerting sufficient beauty. Moreover, the molded articles according to the present invention can also be applied to automotive interior trims and various automotive parts, such as a dashboard in front of a driver seat and a handle. Yet, the molded articles according to the present invention can further be applied to e.g. fishing poles, golf gear, rackets for ball game, climbing gear, or care tools such as sticks, powered suits and walking training equipments. Fig. 9 is an example to apply the resin-molded articles 10 according to the present invention to a golf shaft 50, and it is possible to provide a golf shaft that can satisfy various performance having been required by the existing golf shafts and is superior in the beautiful appearance. The application of the resin-molded articles 10 according to the present invention is not limited to the two examples described above and is applicable to various daily commodity and structural parts over the wide-range.

### Industrial Use of the Invention

According to the present invention, an resin-molded article having excellent surface property, such as surface smoothness and beautiful appearance, while securing advantages of strength, rigidness and lightweight given by virtue of kneading of fibers, and further being provided with resistance against weather, ultraviolet rays and light can be attained. In addition, a process and an apparatus for manufacturing resin-molded articles, which enables easy surface processing to the surface of a molded article comprising a fibrous base member, reduction of the manufacturing steps and homogenization of the surface aspect, such as smoothening of surface, can also attained.

## Claims

1. A resin-molded article (10) prepared by a process comprising the following steps
placing a molded base (1) on a tray (23), wherein the molded base (1) is prepared by adding at least one material selected from a group consisting of ABS, polycarbonate, acryl and nylon as a binding agent to a fibrous base member comprising any of carbon fibers, glass fibers and the complex thereof and performing the following molding,
arranging a resin surface skin member provided with an adhering layer (2) of an acrylic adhesive over the molded base (1) such that the adhering layer (2) of the resin surface skin member is directed downward, wherein the resin surface skin member (3, 29) comprises at least one material selected from a group consisting of acryl polycarbonate, ABS, PET, vinyl chloride, polyurethane and polypropylene and the thickness of the resin surface skin member (3, 29) is in a range of from 0.1 mm to 0.5 mm,
rendering the surroundings of the molded base (1) and the resin surface skin member (3, 29) in a negatively-pressurized state and heating the resin surface skin member (23), heating the resin surface skin member (3, 29) and ascending the tray (23) to thereby closely contact the molded base (1) to the resin surface skin member (3, 29), and
rendering the upper region of the tray (23) in a pressurized state and subsequently opening the surrounding of the tray (23) to remove the molded base (1) coated with the resin surface skin member (3, 29).

2. A resin-molded article (10) according to claim 1, wherein the resin surface skin member (3, 29) is **characterized in that** the adhering layer (2) is attached to the underside of a resin film and a decorative layer (4) is formed on the surface of the molded fibrous base.

3. A resin-molded article (10) according to claim 1 or claim 2, wherein the resin surface skin member (3, 29) is **characterized in that** the adhering layer (2) is attached to the underside of a resin film and a decorative layer (4) is intervened between the resin film and the adhering layer (2).

4. A resin-molded article (10) according to any one of claims 1 to 3, wherein the resin surface skin member (3, 29) is **characterized in that** it is prepared by etching the underside of the resin film and then attaching the adhering layer (2) to the underside

5. A process for manufacturing resin-molded articles (10), **characterized in that** the process comprises the following consecutive steps:
placing a molded base (1) on a tray (23), wherein the molded base is prepared by adding at least one material selected from a group consisting of ABS, polycarbonate, acryl and nylon as a binding agent to a fibrous base member comprising any of carbon fibers, glass fibers and the complex thereof and performing the following molding,
arranging a resin surface skin member (3, 29) provided with an adhering layer (2) of an acrylic adhesive over the molded base (1) such that the adhering layer (2) of the resin surface skin member (3, 29) is directed downward, wherein the resin surface skin member (3, 29) comprises at least one material selected from a group consisting of acryl polycarbonate, ABS, PET, vinyl chloride, polyurethane and polypropylene and wherein the thickness of the resin surface skin member is in a range of from 0.1 mm to 0.5 mm,
rendering the surroundings of the molded base (1) and the resin surface skin member (3, 29) in a negatively-pressurized state and heating the resin surface skin member (3, 29), heating the resin surface skin member (3, 29) and ascending the tray (23) to thereby closely contact the molded base (1) to the resin surface skin member (23), and
rendering the upper region of the tray (23) in a pressurized state and subsequently opening the surrounding of the tray (23) to remove the molded base (1) coated with the resin surface skin member. member (3, 29).

6. A process for manufacturing resin-molded articles (10) according to claim 5 wherein the resin surface skin member i (3, 29) is **characterized in that** the adhering layer (2) is attached to the underside of a resin film and a decorative layer (4) is formed on the surface of the molded fibrous base.

7. A process for manufacturing resin-molded articles (10) according to claim 5 or 6 wherein the resin surface skin member i (3, 29) is **characterized in that** the adhering layer (2) is attached to the underside of a resin film and a decorative layer (4) is intervened between the resin film and the adhering layer (2).

8. A process for manufacturing resin-molded articles (10) according to any one of claims 5 to 7, wherein the resin surface skin member (3, 29) is **characterized in that** it is prepared by etching the underside of the resin film and then attaching the adhering layer (2) to the underside.

## Patentansprüche

1. Harzformartikel (10), hergestellt durch ein Verfahren, das die folgenden Schritte umfasst:
Anordnen einer Formbasis (1) auf einer Schale (23), wobei die Formbasis (1) hergestellt wird, indem mindestens ein Material, ausgewählt aus einer Gruppe bestehend aus ABS, Polycarbonat, Acryl und Nylon, als Bindemittel zu einem faserhaltigen Basiselement, umfassend irgendeine von Kohlenstofffasern, Glasfasern und den Komplex davon, hinzugefügt und der folgende Formvorgang durchgeführt wird,
Anordnen eines Harzoberflächenhautelements, das mit einer Haftschicht (2) aus einem Acrylklebstoff versehen ist, derart über der Formbasis (1), dass die Haftschicht (2) des Harzoberflächenhautelements nach unten ausgerichtet ist, wobei das Harzoberflächenhautelement (3, 29) mindestens ein Material umfasst, ausgewählt aus einer Gruppe bestehend aus Acryl, Polycarbonat, ABS, PET, Vinylchlorid, Polyurethan und Polypropylen, und die Dicke des Harzoberflächenhautelements (3, 29) in einem Bereich von 0,1 mm bis 0,5 mm liegt,
Versetzen der Umgebung der Formbasis (1) und des Harzoberflächenhautelements (3, 29) in einen negativ druckbeaufschlagten Zustand und Erhitzen des Harzoberflächenhautelements (23),
Erhitzen des Harzoberflächenhautelements (3, 29) und Anheben der Schale (23), um dadurch die Formbasis (1) in engen Kontakt mit dem Harzoberflächenhautelement (3, 29) zu bringen, und
Versetzen des oberen Bereichs der Schale (23) in einen druckbeaufschlagten Zustand und anschließendes Öffnen der Umgebung der Schale (23), um die mit dem Harzoberflächenhautelement (3, 29) beschichtete Formbasis (1) zu entfernen.

2. Harzformartikel (10) nach Anspruch 1, wobei das Harzoberflächenhautelement (3, 29) **dadurch gekennzeichnet ist, dass** die Haftschicht (2) an der Unterseite eines Harzfilms angebracht wird und eine Dekorschicht (4) auf der Oberfläche der faserhaltigen Formbasis gebildet wird.

3. Harzformartikel (10) nach Anspruch 1 oder Anspruch 2, wobei das Harzoberflächenhautelement (3, 29) **dadurch gekennzeichnet ist, dass** die Haftschicht (2) an der Unterseite eines Harzfilms angebracht ist und eine Dekorschicht (4) zwischen dem Harzfilm und der Haftschicht (2) eingefügt ist.

4. Harzformartikel (10) nach einem der Ansprüche 1 bis 3, wobei das Harzoberflächenhautelement (3, 29) **dadurch gekennzeichnet ist, dass** es durch Ätzen der Unterseite des Harzfilms und anschließendes Anbringen der Haftschicht (2) an der Unterseite hergestellt wird.

5. Verfahren zur Herstellung von Harzformartikeln (10), **dadurch gekennzeichnet, dass** das Verfahren die folgenden aufeinanderfolgenden Schritte umfasst:
Anordnen einer Formbasis (1) auf einer Schale (23), wobei die Formbasis hergestellt wird, indem mindestens ein Material, ausgewählt aus einer Gruppe bestehend aus ABS, Polycarbonat, Acryl und Nylon, als Bindemittel zu einem faserhaltigen Basiselement, umfassend irgendeine von Kohlenstofffasern, Glasfasern und den Komplex davon, hinzugefügt und der folgende Formvorgang durchgeführt wird
Anordnen eines Harzoberflächenhautelements (3, 29), das mit einer Haftschicht (2) aus einem Acrylklebstoff versehen ist, derart über der Formbasis (1), dass die Haftschicht (2) des Harzoberflächenhautelements (3, 29) nach unten ausgerichtet ist, wobei das Harzoberflächenhautelement (3, 29) mindestens ein Material umfasst, ausgewählt aus einer Gruppe bestehend aus Acryl, Polycarbonat, ABS, PET, Vinylchlorid, Polyurethan und Polypropylen, und wobei die Dicke des Harzoberflächenhautelements in einem Bereich von 0,1 mm bis 0,5 mm liegt,
Versetzen der Umgebung der Formbasis (1) und des Harzoberflächenhautelements (3, 29) in einen Zustand mit negativem Druck und Erhitzen des Harzoberflächenhautelements (3, 29),
Erhitzen des Harzoberflächenhautelements (3, 29) und Anheben der Schale (23), um dadurch die Formbasis (1) in engen Kontakt mit dem Harzoberflächenhautelement (23) zu bringen, und
Versetzen des oberen Bereichs der Schale (23) in einen druckbeaufschlagten Zustand und anschließendes Öffnen der Umgebung der Schale (23), um die mit dem Harzoberflächenhautelement (3, 29) beschichtete Formbasis (1) zu entfernen.

6. Verfahren zur Herstellung von Harzformartikeln (10) nach Anspruch 5, wobei das Harzoberflächenhautelement (3, 29) **dadurch gekennzeichnet ist, dass** die Haftschicht (2) an der Unterseite eines Harzfilms angebracht wird und eine Dekorschicht (4) auf der Oberfläche der faserhaltigen Formbasis gebildet wird.

7. Verfahren zur Herstellung von Harzformartikeln (10) nach Anspruch 5 oder 6, wobei das Harzoberflächenhautelement (3, 29) **dadurch gekennzeichnet ist, dass** die Haftschicht (2) an der Unterseite eines Harzfilms angebracht ist und eine Dekorschicht (4) zwischen dem Harzfilm und der Haftschicht (2) eingefügt ist.

8. Verfahren zur Herstellung von Harzformartikeln (10) nach einem der Ansprüche 5 bis 7, wobei das Harzoberflächenhautelement (3, 29) **dadurch gekennzeichnet ist, dass** es durch Ätzen der Unterseite des Harzfilms und anschließendes Anbringen der Haftschicht (2) an der Unterseite hergestellt wird.

## Revendications

1. Article moulé en résine (10) préparé par un procédé comprenant les étapes suivantes :
placement d'une base moulée (1) sur un plateau (23), la base moulée (1) étant préparée en ajoutant au moins un matériau sélectionné dans un groupe composé de l'ABS, du polycarbonate, de l'acrylique et du nylon comme agent liant dans un élément de base fibreux comprenant tout matériau parmi les fibres de carbone, les fibres de verre et leurs complexes et en réalisant le moulage suivant,
disposition d'un élément de pellicule de surface en résine pourvu d'une couche adhérente (2) d'adhésif acrylique sur la base moulée (1) de manière à ce que la couche adhérente (2) de l'élément de pellicule de surface en résine soit dirigée vers le bas, l'élément de pellicule de surface en résine (3, 29) comprenant au moins un matériau sélectionné dans un groupe composé de l'acrylique, du polycarbonate, de l'ABS, du PET, du chlorure de vinyle, du polyuréthane et du polypropylène, et l'épaisseur de l'élément de pellicule de surface en résine (3, 29) étant de l'ordre de 0,1 mm à 0,5 mm,
mise de l'entourage de la base moulée (1) et de l'élément de pellicule de surface en résine (3, 29) dans un état à pression négative et chauffage de l'élément de pellicule de surface en résine (23),
chauffage de l'élément pellicule de surface en résine (3, 29) et levage du plateau (23) pour mettre ainsi en contact étroit la base moulée (1) avec l'élément de pellicule de surface en résine (3, 29), et
mise de la zone supérieure du plateau (23) dans un état pressurisé et ensuite ouverture de l'entourage du plateau (23) pour enlever la base moulée (1) revêtue avec l'élément de pellicule de surface en résine (3, 29) .

2. Article moulé en résine (10) selon la revendication 1, dans lequel l'élément de pellicule de surface en résine (3, 29) est **caractérisé en ce que** la couche adhérente (2) est fixée à la face inférieure d'un film en résine et qu'une couche décorative (4) est formée sur la surface de la base fibreuse moulée.

3. Article moulé en résine (10) selon la revendication 1 ou la revendication 2, dans lequel l'élément de pellicule de surface en résine (3, 29) est **caractérisé en ce que** la couche adhérente (2) est fixée à la face inférieure d'un film en résine et qu'une couche décorative (4) est intercalée entre le film en résine et la couche adhérente (2).

4. Article moulé en résine (10) selon l'une quelconque des revendications 1 à 3, dans lequel l'élément de pellicule de surface en résine (3, 29) est **caractérisé en ce qu'**il est préparé en gravant la face inférieure du film en résine puis en fixant la couche adhérente (2) à la face inférieure.

5. Procédé de fabrication d'articles moulés en résine (10), **caractérisé en ce que** le procédé comprend les étapes consécutives suivantes :
placement d'une base moulée (1) sur un plateau (23), la base moulée étant préparée en ajoutant au moins un matériau sélectionné dans un groupe composé de l'ABS, du polycarbonate, de l'acrylique et du nylon comme agent liant dans un élément de base fibreux comprenant tout matériau parmi les fibres de carbone, les fibres de verre et leurs complexes et en réalisant le moulage suivant,
disposition d'un élément de pellicule de surface en résine (3, 29) pourvu d'une couche adhérente (2) d'adhésif acrylique sur la base moulée (1) de manière à ce que la couche adhérente (2) de l'élément de pellicule de surface en résine soit dirigée vers le bas, l'élément de pellicule de surface en résine (3, 29) comprenant au moins un matériau sélectionné dans un groupe composé de l'acrylique, du polycarbonate, de l'ABS, du PET, du chlorure de vinyle, du polyuréthane et du polypropylène, et l'épaisseur de l'élément de pellicule de surface en résine étant de l'ordre de 0,1 mm à 0,5 mm,
mise de l'entourage de la base moulée (1) et de l'élément de pellicule de surface en résine (3, 29) dans un état à pression négative et le chauffage de l'élément de pellicule de surface en résine (3, 29),
chauffage du l'élément pellicule de surface en résine (3, 29) et levage du plateau (23) pour mettre ainsi en contact étroit la base moulée (1) avec l'élément de pellicule de surface en résine (23), et
la mise de la zone supérieure du plateau (23) dans un état pressurisé et ensuite l'ouverture de l'entourage du plateau (23) pour enlever la base moulée (1) revêtue avec l'élément de pellicule de surface en résine (3, 29) .

6. Procédé de fabrication d'articles moulés en résine (10) selon la revendication 5, dans lequel l'élément de pellicule de surface en résine (3, 29) est **caractérisé en ce que** la couche adhérente (2) est fixée à la face inférieure d'un film en résine et qu'une couche décorative (4) est formée sur la surface de la base fibreuse moulée.

7. Procédé de fabrication d'articles moulés en résine (10) selon la revendication 5 ou 6, dans lequel l'élément de pellicule de surface en résine (3, 29) est **caractérisé en ce que** la couche adhérente (2) est fixée à la face inférieure d'un film en résine et qu'une couche décorative (4) est intercalée entre le film en résine et la couche adhérente (2).

8. Procédé de fabrication d'articles moulés en résine (10) selon l'une quelconque des revendications 5 à 7, dans lequel l'élément de pellicule de surface en résine (3, 29) est **caractérisé en ce qu'**il est préparé en gravant la face inférieure du film de résine puis en fixant la couche adhérente (2) à la face inférieure.
